**Europäisches Patentamt**

**European Patent Office**

**Office européen des brevets**

(19)

(11) Publication number: **0 291 618 B1**

# EUROPEAN PATENT SPECIFICATION

(12)

(45) Date of publication of patent specification: **25.09.91**   (51) Int. Cl.⁵: **H01M 10/16**

(21) Application number: **87500086.1**

(22) Date of filing: **22.12.87**

(54) **Electrical battery.**

(30) Priority: **18.05.87 ES 8701655 U**

(43) Date of publication of application:
**23.11.88 Bulletin 88/47**

(45) Publication of the grant of the patent:
**25.09.91 Bulletin 91/39**

(84) Designated Contracting States:
**AT BE CH DE FR GB GR IT LI LU NL SE**

(56) References cited:
**AU-B- 87 657 75**
**DE-A- 2 810 826**
**DE-A- 2 834 411**
**US-A- 4 122 244**

(73) Proprietor: **SOCIEDAD ESPANOLA DEL AC-
UMULADOR TUDOR, S.A.**
**Condesa de Venadito, 1**
**E-28027 Madrid(ES)**

(72) Inventor: **Lopez-Doriga Lopez-Doriga, Juan
Antonio**
**Cea Berm dez 37**
**E-28003 Madrid(ES)**

(74) Representative: **Gomez-Acebo y Pombo, José
Miguel**
**c/o CLARKE, MODET & Co. Paseo de la
Castellana 164**
**E-28046 Madrid(ES)**

## Description

The present invention relates to an electrical battery.

A typical battery comprises a container which is internally sub-divided into cells, in each one of which there is a set or assembly of plates and separators. Plates of the same polarity are connected at the top by an electrical connection bridge.

Such batteries, especially batteries referred to as starter batteries, normally present problems of resistance to vibrations, particularly in the packages of plates and separators and in the connecting bridges.

The vibrations to which starter batteries are subjected cause relative displacements between plates and separators resulting in a drop in output of the battery and their premature wear.

In the same way, the vibrations of the battery may result in fracture of the connecting bridges, rendering the battery completely useless.

One object of the present invention is to develop an electrical battery, particularly a battery for use as a starter battery, which is capable of supplying power (to start the engine), even under the most severe conditions, has a long working life and is capable of withstanding vibrations which are far greater than those of conventional batteries, so that the battery can be advantageously used in heavy duty applications, e.g. for starting engines for public works and agricultural machinery, tractors, lorries, fork lift trucks, buses, vans, taxis etc.

According to the present invention, we propose an electrical battery comprising a container with a cover and divided into cells each of which houses an assembly of plates and separators, the plates of one polarity being electrically connected together by a bridge, characterised in that each cell comprises an anchorage for the connecting bridges, and comprising a member which bears on the bridge and against the wall of the cell, the member extending in the direction of the wall for connection with the cover, and a fixing member comprising a transverse connecting plate, which bears on top of the assembly of plates and separators and has on opposite edges thereof wedge-shaped columns that are introduced between the assembly and adjacent cell walls. The fixing member serves perfectly to secure the package of plates and separators so that they are not affected by any vibrations to which the battery may be subjected. In the same way, the anchorage for the connecting bridges offers a support for the bridges so that the risks of breakage are eliminated.

In a preferred embodiment, the anchorage for the connecting bridges is a square-shaped member, one of the arms of which bears externally on the bridge while the other arm also rests externally on the adjacent wall of the container. The arm which rests on the bridge has along the edges of its outer surface longitudinal walls which engage around the bridge. The arm which bears on the wall of the container extends as far as the edge of the wall to be connected to the cover when this is fixed by welding or sealing, the anchorage member being immobilised in the process.

The fixing member which secures the package of plates and separators, comprises at least four parallel columns and an intermediate transverse connection plate. The plate should preferably be of a squared shape having at least two of its opposite edges parallel, there being situated on each of these edges two or more columns which occupy positions opposite the columns on the other edge.

The columns situated on one and the same edge of the intermediate transverse plate has flat and coplanar outer surfaces which are at right-angles to the said transverse plate, while the opposite inner surface is inclined outwardly in the longitudinal direction from the intermediate plate, converging with the outer surface towards the free ends of the columns. Being so designed, the inside surface of the portion of each column which is situated on one side and the other of the intermediate plate defines a wedge. The distance between the outer surface of the columns on one edge and the other is approximately equal to the distance between the inner surface of two of the opposite walls of each cell, between the walls of which and the assembly of plates and separators the columns are inserted, the inner inclined surface thereof being directed towards the assembly of plates and separators, while through their outer surface they bear on the inner surfaces of the walls of the cell.

Other objects, advantages and features of the invention will be more apparent from the following description, by way of example of a preferred embodiment. Reference is made to the appended drawings in which:

Figure 1 is a perspective view of an electrical battery with the cover and walls shown partly in section;

Figure 2 is a perspective view of a member used for securing the package of plates and separators; and

Figure 3 is a perspective view of an anchorage for the connection bridges.

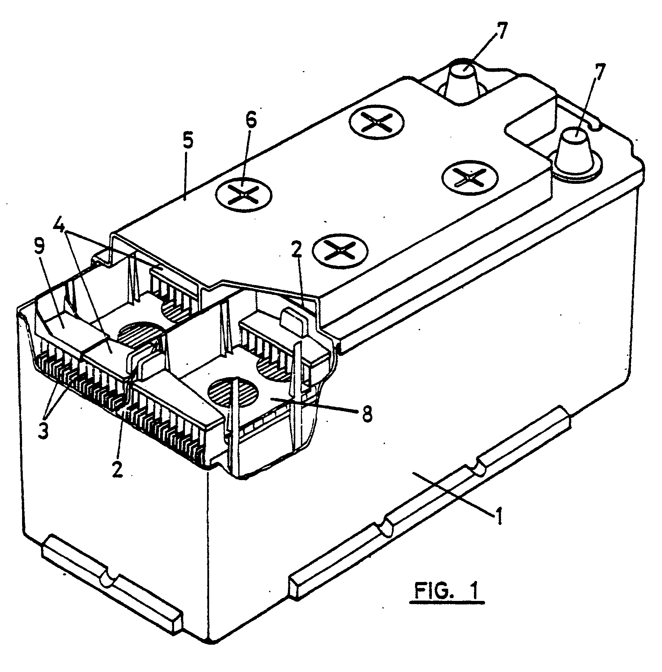

As can be seen in Figure 1, the battery includes a container 1 which is sub-divided internally by partitions 2 into cells in each of which there is housed a package of plates and separators 3. The plates of one and the same sign are connected by electrical connection bridges. The container 1 is closed at the top by a cover 5 on which are mounted plugs 6 for monitoring the level of electrolyte. Connecting terminals 7 also project through the cover 5.

The container of the battery may have a configuration other than that shown in Figure 1.

In each of the cells of the battery, immediately above the package of plates and separators 3, there is a fastening member 8 for securing the aforesaid package. In addition, anchorages 9 for the connecting bridges 4 are provided in each cell.

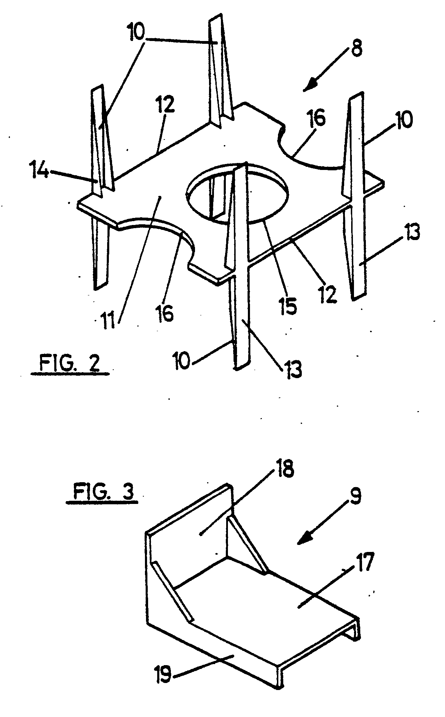

As can be seen best in Figure 2, the securing member comprises four parallel columns 10 connected inter se by an intermediate transverse plate 11 at right-angles to the said columns. The plate 11 has at least two opposite parallel edges 12, two columns being situated on each of these edges in positions such that those on one edge face those on the other. The two columns 10 of each edge have coplanar outer surfaces 13 at right-angles to the plate 12 while on the inside they have surfaces which are inclined in a longitudinal direction from the plate 12, converging with the outer surface towards the free end, the columns defining wedges on one side and the other of the plate 12.

The columns 10 may consist of C-shaped sections in which the opening is opposite those on the other side. The lateral arms 14 of these sections diminish in height progressively from the transverse plate 11 to provide the inclined surface which constitutes the wedge. The edges 12 may be coplanar with the outer surfaces 13 of the columns. The distance between the outer surface of the columns on one side and the other and therefore the distance between the edges 12 of the plate will be approximately equal to the distance between the inner surface of two of the opposite walls of each cell between which the anchorage is fitted, the wedges situated towards one of the sides of the transverse plate 11 being introduced between the package of plates and separators and two of the walls of the cells, as shown in Figure 1, until the transverse plate 11 is bearing on the top edge of the plates and separators. The wedges which are directed towards the opposite side of the transverse plate 11 reach to the top edge of the walls of the cell, as Figure 1 shows, so that when the cover 5 of the battery is secured, the fixing member 8 is prevented from moving. At the same time, the wedges inserted between the assembly of plates and separators and the walls of the cell apply pressure to the package of plates which are secured against movement by reason of any vibrations to which the battery is subjected.

As in Figure 2 above, the transverse plate 11 may have a central aperture 15 as well as cut-outs 16 starting at the free edges.

When the cover 5 is welded or sealed onto the container 1, the top ends of the wedges are joined so that they are immobilised.

With regard to the anchoring member 9 shown in Figure 3, this consists of an L-shaped piece, one of the arms of which, identified by reference numeral 17, bears externally on the bridge 4, while the other arm, identified by reference numeral 18, bears on the outside on the wall of the battery container, as can be seen in Figure 1. The height of the arm 18 is such that the free top edge is flush with the edge of the container 1, so that when the cover 5 of the container is sealed or welded, it joins the top edge of said arm, so preventing movement of the anchoring member 9.

The bottom of arm 17 has longitudinal walls 19 along the edges which engage laterally around the connecting bridge 4. In this way, the bridges 4 remain perfectly secured at the sides and top by the anchoring member 9, preventing any breakage due to any vibrations to which the battery might be subjected.

Furthermore, there are on each cell two adhesive strips or beads positioned transversely of the plates and separators, adjacent the cell walls, which assist in immobilising the plates and separators.

The container and cover of the battery may be specially produced from shock-resistant polypropylene.

To achieve maximum performance from the battery, the grids may be of special low-antimony alloy to minimise the maintenance required by auto-discharge and the consumption of water in the filling, while at the same time offering a high resistance to ageing. In order to prolong the life of the battery, the plates are provided with reinforced grids. The separators will be of low electrical resistance to guarantee a high starting output, and will be combined with glass wool.

Finally, the above-described battery has a longer life than a conventional starter battery, together with greater resistance to vibrations.

## Claims

1. An electrical battery comprising a container (1) with a cover (5) and divided into cells each of which houses an assembly (3) of plates and separators, the plates of one polarity being electrically connected together by a bridge (4) each cell comprising an "L" shaped anchorage (9) for the connecting bridge (4), the "L" shaped anchorage (9) comprising one arm which bears on the bridge (4) and the other arm on the wall of the cell, said second arm extending in the direction of the wall for connection with the cover (5), characterised by a fixing member (8) comprising a transverse connecting plate (11), which bears on top of the assembly (3) of plates and separators and has on opposite edges thereof wedge-shaped columns (10) that are introduced between the assembly (3) and adjacent cell walls.

2. A battery according to claim 1 wherein the columns (10) of each fixing member (8) have a flat outer surface (13) for engagement with the cell wall, the distance between the outer surface on opposite edges (12) of the transverse connecting plate (11) being approximately equal to the distance between the opposite walls of the cell.

3. A battery according to claim 1 or claim 2 wherein the fixing member (8) comprises at least two columns (10) on each of the said opposite edges (12) of the transverse connecting plate (11), the columns (10) on one edge being diposed directly opposite the columns on the other edge.

4. An electrical battery comprising a container (1) internally sub-divided into cells in each of which there is housed an assembly (3) of plates and separators, the plate of one and the same sign being connected at the top by an electrical connecting bridge (4), characterised by a fixing member (8) consisting of at least four parallel columns (10) and an intermediate transverse connecting plate (11), the plate comprising at least two opposite and parallel edges (12), on each of which there are situated two or more columns (10), the columns (10) on one side being opposite those on the other, the columns of each edge having flat and coplanar outer surfaces (13) at right-angles to the intermediate transverse plate (11), while on the inside, extending from the transverse plate, each column has longitudinally inclined flat surfaces converging with the outer surface towards the free ends of the columns (10), defining parallel wedges (14) on either side of the transverse plate, the distance between the outer surface (13) of the columns (10) of one edge (12) and the other being approximately equal to the distance between the inner surfaces of two of the opposite walls of each cell, between the walls of which and the assembly (3) of plates and separators the columns (10) are introduced, with the inclined inner surface of the columns being directed towards the assembly (3) of plates and separators, the intermediate transverse plate (11) bearing on the top edge of the plates and separators.

5. A battery according to any one of claims 1 to 4, wherein the columns (10) are C-shaped in cross-section, having longitudinal side walls (14) defining therebetween a channel that faces inwardly toward the assembly (3) of plates and separators, the side walls (14) diminishing in height from the transverse connecting plate (11) to the free end of the columns.

6. A battery according to any one of claims 1 to 5, wherein the transverse connecting plate (11) has a central opening (15) and recesses in the edges thereof without columns.

7. A battery according to any one of claims 1 to 6, wherein the two opposite (12) edges of the transverse connecting plate (11) on which the columns (10) are disposed are in the same plane as outer surfaces in contact with the cell walls.

**Revendications**

1. Batterie électrique comprenant un bac (1) avec un couvercle (5) et divisé en compartiments ou cellules, dans chacun desquels est logé un ensemble (3) de plaques et de séparateurs, les plaques d'une polarité étant électriquement connectées ensemble par une barrette (4), chaque cellule comprenant un ancrage (9) en "L" pour la barrette de connexion (4), l'ancrage (9) en "L" possédant un bras qui porte sur la barrette (4), l'autre bras portant sur la paroi de la cellule, ce second bras s'étendant dans la direction de la paroi en vue de son attache au couvercle (5), caractérisée par une pièce de fixation (8) constituée d'une plaque transversale de liaison (11) qui porte sur le sommet de l'ensemble (3) de plaques et de séparateurs et dont les bords opposés portent des colonnes (10) en forme de coins qui sont engagées entre l'ensemble (3) et les parois adjacentes de la cellule.

2. Batterie selon la revendication 1, dans laquelle les colonnes (10) de chaque pièce de fixation (8) ont une face extérieure plane (13) destinée à s'appliquer contre la paroi de la cellule, la distance entre les faces extérieures des colonnes sur les bords opposés (12) de la plaque transversale de liaison (11) étant approximativement égale à la distance entre les parois opposées de la cellule.

3. Batterie selon la revendication 1 ou 2, dans laquelle la pièce de fixation (8) possède au moins deux colonnes (10) sur chacun des bords opposés (12) de la plaque transversale de liaison (11), les colonnes (10) sur un bord étant disposées directement à l'opposé des colonnes sur l'autre bord.

4. Batterie électrique comprenant un bac (1) dont l'intérieur est subdivisé en cellules, dans chacune desquelles est logé un ensemble (3) de plaques et de séparateurs, les plaques d'un seul et même signe étant connectées entre elles au sommet par une barrette de connexion électrique (4), caractérisée par une pièce de fixation (8) constituée d'au moins quatre colonnes parallèles (10) et d'une plaque transversale intermédiaire de liaison (11), cette plaque présentant au moins deux bords (12) opposés et parallèles sur chacun desquels sont situés deux ou davantage de colonnes (10) sur l'un et l'autre côté, les colonnes (10) d'un côté étant opposées à celles de l'autre côté, les colonnes de chaque bord ayant des faces extérieures planes (13) situées dans le même plan et faisant un angle droit avec la plaque transversale intermédiaire (11), tandis que, sur le côté intérieur, chaque colonne possède des faces planes inclinées longitudinalement, qui s'étendent à partir de la plaque transversale et convergent avec la face extérieure vers les extrémités libres de la colonne (10), de sorte que des coins parallèles (14) sont formés sur chaque côté de la plaque transversale, la distance entre la face extérieure (13) des colonnes (10) d'un bord (12) et la face extérieure des colonnes de l'autre bord étant approximativement égale à la distance entre les surfaces internes de deux des parois opposées de chaque cellule, les colonnes (10) étant engagées entre ces parois de la cellule et l'ensemble (3) de plaques et de séparateurs, de manière que la face intérieure inclinée des colonnes soit dirigée vers l'ensemble (3) de plaques et de séparateurs, la plaque transversale intermédiaire (11) portant sur les bords supérieurs des plaques et des séparateurs.

5. Batterie selon l'une-quelconque des revendications 1 à 4, dans laquelle les colonnes (10) ont une section droite en C et possèdent des parois latérales longitudinales (14) qui définissent entre elles une rainure s'ouvrant vers l'intérieur en direction de l'ensemble (3) de plaques et de séparateurs, les parois latérales (14) diminuant en hauteur à partir de la plaque transversale de liaison (11) jusqu'à l'extrémité libre des colonnes.

6. Batterie selon l'une quelconque des revendications 1 à 5, dans laquelle la plaque transversale de liaison (11) présente une ouverture centrale (15) et des échancrures dans ses bords dépourvus de colonnes.

7. Batterie selon l'une quelconque des revendications 1 à 6, dans laquelle les deux bords (12) opposés de la plaque transversale de liaison (11) sur lesquels sont disposées les colonnes (10), sont situés dans le même plan que les faces extérieures en contact avec les parois de la cellule.

**Patentansprüche**

1. Elektrische Batterie mit einem Behälter (1) mit Deckel (5), der in Zellen unterteilt ist, wovon jede eine Anordnung (3) aus Platten und Separatoren aufnimmt, die Platten einer Polarität elektrisch durch eine Brücke (4) miteinander verbunden sind, jede Zelle eine "L"-förmige Verankerung (9) für die verbindende Brücke (4) umfaßt, die "L"-förmige Verankerung (9) einen Arm enthält, der auf der Brücke (4) anliegt und der andere Arm an der Zellenwand, und dieser zweite Arm sich in Richtung der Wand zwecks Verbindung mit dem Deckel (5) erstreckt,

**gekennzeichnet** durch

ein Befestigungeselement (8), das eine quer verlaufende Verbindungsplatte (11) umfaßt, die auf der Oberseite der Anordnung (3) der Platten und Separatoren aufliegt und an ihren gegenüberliegenden Kanten keilförmige Ständer (10) aufweist, die zwischen der Anordnung (3) und den benachbarten Zellenwänden eingeführt sind.

2. Batterie nach Anspruch 1,
dadurch **gekennzeichnet, daß**
die Ständer (10) eines jeden Befestigungselements (8) eine flache Außenfläche (13) zur Anlage an der Zellenwand haben, und daß der Abstand zwischen der Außenfläche von gegenüberliegenden Kanten (12) der quer verlaufenden Verbindungsplatte (11) näherungsweise gleich dem Abstand zwischen den gegenüberliegenden Wänden der Zelle ist.

3. Batterie nach Anspruch 1 oder 2,
dadurch **gekennzeichnet, daß**
das Befestigungselement (8) mindestens zwei Ständer (10) an jeder der genannten gegenüberliegenden Kanten (12) der quer verlaufenden Verbindungsplatte (11) umfaßt, und daß die Ständer (10) an einer Kante den Ständern an der anderen Kante unmittelbar gegenüberliegend angeordnet sind.

4. Elektrische Batterie mit einem Behälter (1), der in seinem Inneren in Zellen unterteilt ist, in denen jeweils eine Anordnung (3) aus Platten und Separatoren aufgenommen wird, und die Platte mit gleichem Vorzeichen an der Oberseite mittels einer elektrischen Verbindungsbrücke (4) angeschlossen ist, **gekennzeichnet** durch ein Befestigungselement (8), das aus mindestens vier parallelen Ständern (10) und einer dazwischen liegenden, quer verlaufenden Verbindungsplatte (11) besteht, die Platte mindestens zwei einander gegenüberliegende und parallele Kanten (12) umfaßt, auf jeder derselben zwei oder mehr Ständer (10) angeordnet sind, die Ständer (10) an einer Seite den Ständern der anderen Seite gegenüberliegen, die Ständer jeder Kante flache und planparallele Außenflächen (13) haben, die rechtwinklig zu der zwischengeschalteten, quer verlaufenden Platte (11) liegen, während an der Innenseite, ausgehend von der quer verlaufenden Platte, jeder Ständer in Längsrichtung geneigte flache Oberflächen hat, die mit der Außenfläche gegen die freien Enden der Ständer (10) hin konvergieren und parallele Keile (14) an beiden Seiten der quer verlaufenden Platte bilden, der Abstand zwischen der Außenfläche (13) der Ständer (10) der einen Kante (12) und der anderen Kante annäherungsweise gleich dem Abstand zwischen den Innenflächen zweier der gegenüberliegenden Wände einer jeden Zelle ist, zwischen deren Wänden und der Anordnung (3) aus Platten und Separatoren die Ständer (10) eingeführt sind, wobei die geneigte Innenfläche der Ständer der Anordnung (3) aus Platten und Separatoren zugewandt ist, und die zwischengeschaltete, quer verlaufende Platte (11) auf der oberen Kante der Platten und Separatoren aufliegt.

5.  Batterie nach irgendeinem der Ansprüche 1 bis 4,
    dadurch **gekennzeichnet,** daß
    die Ständer (10) einen C-förmigen Querschnitt haben und sich in Längsrichtung erstreckende Seitenwände (14), die zwischen sich einen Kanal bilden, der nach innen gegen die Anordnung (3) aus Platten und Separatoren gerichtet ist, und die Seitenwände (14) sich in ihrer Höhe, ausgehend von der quer verlaufenden Verbindungsplatte (11) zu dem freien Ende der Ständer hin, verringern.

6.  Batterie nach einem der Ansprüche 1 bis 5,
    dadurch **gekennzeichnet,** daß
    die quer verlaufende Verbindungsplatte (11) eine mittige Öffnung (15) und Ausnehmungen in den Kanten der Platte hat, die ohne Ständer sind.

7.  Batterie nach irgendeinem der Ansprüche 1 bis 6,
    dadurch **gekennzeichnet,** daß
    die beiden gegenüberliegenden Kanten (12) der quer verlaufenden Verbindungsplatte (11), an denen die Ständer (10) angebracht sind, in der gleichen Ebene als Außenflächen in Anlage mit den Zellenwänden sind.

FIG. 1

FIG. 2

FIG. 3